# EUROPÄISCHE PATENTSCHRIFT

(11) **EP 2 295 302 B1**
(45) Veröffentlichungstag und Bekanntmachung des Hinweises auf die Patenterteilung: **14.06.2017**
(21) Anmeldenummer: 10176314.2
(22) Anmeldetag: 13.09.2010
(51) Int. Cl.: B60W 40/08, B60W 40/09, B60W 40/12, B60W 50/00

(54) **Verfahren zur Ermittlung einer energiesparenden Fahrweise eines Kraftfahrzeuges**
Method for determining an energy efficient operation mode of a motor vehicle
Procédé de détermination d'un mode de conduite à économie d'énergie d'un véhicule automobile

(30) Priorität: 14.09.2009 DE 102009041202
(43) Veröffentlichungstag der Anmeldung: 16.03.2011
(73) Patentinhaber: Continental Automotive GmbH, 30165 Hannover (DE)
(72) Erfinder: Fennel, Helmut, 65812 Bad Soden a. Ts (DE); Meier-Arendt, Guido, 63225 Langen (DE); Möll, Winfried, 35321 Laubach (DE)

(56) Entgegenhaltungen:
- EP-A1- 1 900 588
- WO-A1-2008/087541
- DE-A1-102006 025 658
- FR-A1- 2 917 690
- US-A- 6 092 021
- US-A1- 2007 262 855
- HONDA: "Honda Develops Ecological Drive Assist System for Enhanced Real World Fuel Economy", HONDA , 20. November 2008 (2008-11-20), Seiten 1-3, XP002632629, Gefunden im Internet: URL:http://world.honda.com/news/2008/40811 20Ecological-Drive-Assist-System/ [gefunden am 2011-04-13]

## Beschreibung

Die Erfindung betrifft ein Verfahren zur Ermittlung einer energiesparenden Fahrweise eines Kraftfahrzeuges.

Verfahren zur Ermittlung von Verbrauchen eines Kraftfahrzeuges sind allgemein bekannt. Bei den bekannten Verfahren werden getrennte Verbrauche beispielsweise für Stadtfahrten, Überlandfahrten oder Autobahnfahrten bestimmt, indem beispielsweise eine Maximalgeschwindigkeit oder Durchschnittsgeschwindigkeit festgelegt wird. Mit solchen Verfahren lassen sich verschiedene Kraftfahrzeuge miteinander vergleichen. Mit solchen Verfahren lässt sich jedoch nur ein genormter Verbrauch eines Kraftfahrzeuges ermitteln. Der für den Verbrauch des Kraftfahrzeuges sehr bedeutsame Einfluss des Fahrers lässt sich mit solch einem Verfahren nicht ermitteln.

Weiterhin sind Verfahren bekannt geworden, welche einen aktuellen Verbrauch oder einen Durchschnittsverbrauch an Kraftstoff ermitteln und auf einer Anzeige deutlich sichtbar für den Fahrer anzeigen. In einer solchen Ermittlung des Kraftstoffverbrauchs werden die Einflüsse des Fahrers und des Kraftfahrzeuges gleichermaßen berücksichtigt.

Das Dokument EP 1 900 588 A1 offenbart ein Verfahren zur Ermittlung einer ernergiesparenden Fahrweise eines Kraftfahrzeugs gemäß dem Oberbegriff des Anspruchs 1.

Nachteilig bei den bekannten Verfahren ist jedoch, dass der Fahrer des Kraftfahrzeuges keine Information über seinen konkreten Einfluss auf den Kraftstoffverbrauch hat. Auch ist es mit den bekannten Verfahren nicht möglich, die Fahrweise zweier Fahrer im Hinblick auf den Verbrauch miteinander zu vergleichen.

Dieses Problem wird durch ein Verfahren gemäß Anspruch 1 gelöst. Vorgesehene Parameter der tatsächlichen Fahrweise des Kraftfahrzeugs werden ermittelt, und Parameter der Fahrweise werden mit Parametern einer verbrauchsoptimierten Fahrweise verglichen und es werden anhand des Vergleichs der Parameter Wertungseinheiten für verbrauchsoptimierte Fahrweise berechnet.

Durch diese Gestaltung werden Wertungseinheiten gebildet, um den Einfluss des Fahrers auf den Kraftstoffverbrauch kenntlich zu machen. Die Parameter für verbrauchsoptimierte Fahrweise lassen sich beispielsweise mit dem bekannten Verfahren ermitteln, berechnen oder nach als verbrauchsoptimiert bekannten Verhaltensweisen des Fahrers festlegen. Eine Fahrweise, bei der weniger Kraftstoff verbraucht wird als berechnet, könnte mehr Wertungseinheiten erhalten als eine Fahrweise, bei der der berechnete Verbrauch erreicht wird. Die Wertungseinheiten sind damit ein Maß für die verbrauchsoptimierte Fahrweise des Fahrers des Kraftfahrzeuges.

Ein Vergleich von vergebenen Wertungseinheiten für verschiedene Fahrer gestaltet sich erfindungsgemäß besonders einfach, wenn die Fahrt des Kraftfahrzeuges in Abschnitte bezüglich der Zeit oder der Strecke unterteilt wird und wenn die Wertungseinheiten für die Abschnitte berechnet werden.

Ein besonders hoher Verbrauch lässt sich für den Fahrer gemäß einer vorteilhaften Weiterbildung der Erfindung einfach signalisieren, wenn negative Wertungseinheiten für verbrauchssteigernde Fahrweise berechnet werden.

Einen Einfluss der Fahrweise des Fahrers auf die gesamte Fahrstrecke lässt sich erfindungsgemäß einfach kenntlich machen, wenn die Wertungseinheiten zu einem der energiesparenden Fahrweise entsprechenden Wert addiert werden. Durch diese Gestaltung können die Wertungseinheiten für verbrauchsoptimierte Fahrweise mit Wertungseinheiten für verbrauchssteigernde Fahrweise wegen ihrer unterschiedlichen Vorzeichen bei der Bildung des Wertes verrechnet werden. Damit lässt sich von dem berechneten Wert einfach auf die Gesamtfahrweise des Fahrers rückschließen.

Im einfachsten Fall könnte der Kraftstoffverbrauch des Abschnitts einer gefahrenen Strecke ermittelt werden und mit einem bekannten optimierten Kraftstoffverbrauch verglichen werden. Dies setzt jedoch voraus, dass der bekannte optimierte Kraftstoffverbrauch für die konkret gefahrene Strecke bekannt ist. Die Parameter der tatsächlichen Fahrweise lassen sich jedoch gemäß einer anderen vorteilhaften Weiterbildung der Erfindung einfach mit Parametern einer verbrauchsoptimierten Fahrweise vergleichen, wenn als Parameter der tatsächlichen Fahrweise die gewählte Geschwindigkeit und Beschleunigung, die Wahl einer Getriebeschaltstufe und/oder die Stärke von Abbremsmanövern herangezogen werden. Durch diese Gestaltung können beispielsweise zu fahrende Geschwindigkeiten und Drehzahlen als verbrauchsoptimierte Parameter festgelegt werden. Wenn der Fahrer des Kraftfahrzeuges festgelegte Drehzahlen und Geschwindigkeiten überschreitet oder starke Abbremsmanöver durchführt, können negative Wertungseinheiten und im entgegengesetzten Fall positive Wertungseinheiten vergeben werden.

Zur Erhöhung der Genauigkeit bei der Ermittlung der Verbrauchsoptimierung der tatsächlichen Fahrweise trägt es erfindungsgemäß bei, wenn als Parameter der tatsächlichen Fahrweise ein Verhältnis aus gewählter Geschwindigkeit oder Beschleunigung zur gewählten Getriebeschaltstufe herangezogen wird.

Zur weiteren Erhöhung der Genauigkeit bei der Ermittlung der Verbrauchsoptimierung trägt es gemäß einer anderen vorteilhaften Weiterbildung der Erfindung bei, wenn als Parameter der tatsächlichen Fahrweise vom Fahrer beeinflussbare fahrzeugspezifische Daten herangezogen werden. Fahrzeugspezifische Daten können insbesondere der aktuelle Reifendruck und durchgeführte Inspektionen sein. Durch diese Gestaltung können beispielsweise automatisch negative Wertungseinheiten vergeben werden, wenn der Fahrer nicht mit dem vorgesehenen Reifendruck fährt, da der Reifendruck starken Einfluss auf den Kraftstoffverbrauch des Kraftfahrzeuges hat. Ebenso können auch für Unregelmäßigkeiten bei den wahrgenommenen Inspektionsintervallen negative Wertungseinheiten vergeben werden, da eine regelmäßige Inspektion einen starken Einfluss auf den Kraftstoffverbrauch hat.

Die Verbrauchsoptimierung der Fahrweise lässt sich erfindungsgemäß einfach auswerten, wenn die Wertungseinheiten auf einem Datenträger abgespeichert oder über eine Funkverbindung übertragen werden. Vorzugsweise ist der Datenträger oder die Funkverbindung vor einer Manipulation geschützt.

Bei mehreren Benutzern des Kraftfahrzeuges lassen sich erfindungsgemäß die Fahrweisen der einzelnen Benutzer einfach miteinander vergleichen, wenn der Datenträger zur Abspeicherung der Wertungseinheiten als bauliche Einheit mit einem Berechtigungsschlüssel zum Starten des Kraftfahrzeuges ausgebildet ist. Als Berechtigungsschlüssel eignen sich vorzugsweise elektronische Zündschlüssel.

Der Fahrer des Kraftfahrzeuges wird gemäß einer anderen vorteilhaften Weiterbildung der Erfindung zur verbrauchsoptimierten Fahrweise angehalten, wenn die Wertungseinheiten für den Fahrer sichtbar dargestellt werden. Durch diese Gestaltung erhält der Fahrer einen Anreiz, sich um verbrauchsoptimierte Fahrweise zu bemühen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: ein Flussdiagramm zur Durchführung des erfindungsgemäßen Verfahrens,
- Fig. 2: eine Anzeigetafel und einen Berechtigungsschlüssel zum Starten eines mit dem erfindungsgemäßen Verfahrens arbeitenden Kraftfahrzeuges.

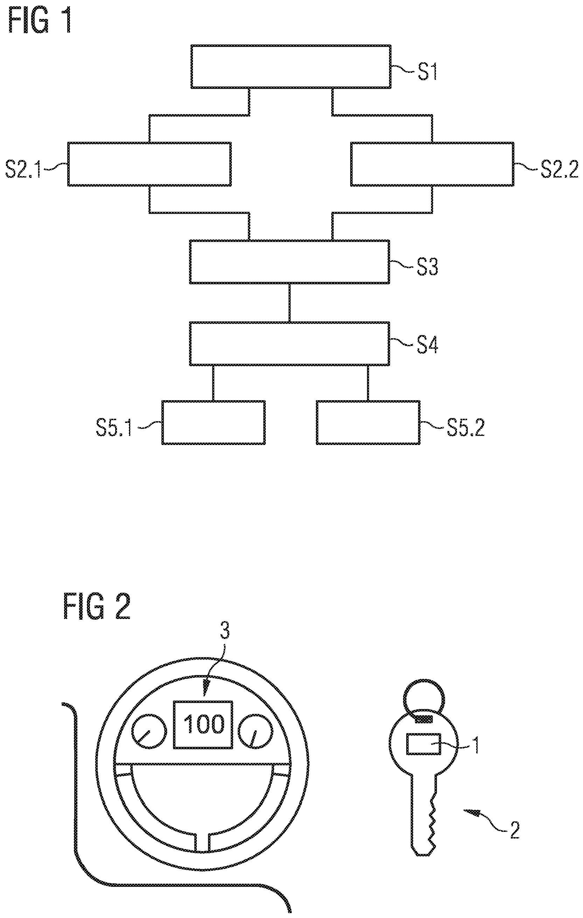

Figur 1 zeigt schematisch einen Signalflussplan zur Durchführung eines Verfahrens zur energiesparenden Fahrweise eines Kraftfahrzeuges. In einem ersten Verfahrensschritt S1 werden Parameter als verbrauchsoptimiert festgelegt. Solche Parameter können beispielsweise eine Stärke eines Abbremsmanövers, die zu fahrende Geschwindigkeit, ein Verhältnis von Beschleunigung und Gangwahl oder dergleichen sein. Weiterhin können als verbrauchsoptimierte Parameter auch vom Fahrer beeinflussbare, fahrzeugspezifische Parameter wie der Reifendruck festgelegt werden.

In einem weiteren Schritt S2.1 werden Parameter zur Fahrweise des Fahrers, wie beispielsweise die tatsächlich gefahrene Geschwindigkeit oder das Verhältnis der Beschleunigung und Gangwahl oder die Stärke von Abbremsmanövern erfasst. Parallel zu dem Schritt S2.1 werden in einem Schritt S2.2 vom Fahrer beeinflussbare Parameter, wie beispielsweise der tatsächliche Reifendruck ermittelt.

In einem Schritt S3 werden die aus den Schritten S2.1 und S2.2 ermittelten Parameter mit den im Schritt S1 festgelegten Parametern verglichen. Im folgenden Schritt S4 erfolgt aus dem im Schritt S3 durchgeführten Vergleich eine Zuordnung von positiven oder negativen Wertungseinheiten für die Fahrweise. Hierbei kann beispielsweise eine negative Wertungseinheit vergeben werden, wenn der Fahrer besonders starke Abbremsmanöver durchführt oder positive Wertungseinheiten vergeben werden, wenn die in den Schritten S2.1 und S2.2 ermittelten Parameter die im Schritt S1 festgelegten Parameter erreichen. In einem folgenden Schritt S5.1 werden die Wertungseinheiten abgespeichert und in einem Schritt S5.2 übermittelt oder zur Anzeige gebracht.

Die Abspeicherung der Wertungseinheiten erfolgt vorzugsweise auf einem in Figur 2 dargestellten Datenträger 1 eines Berechtigungsschlüssels 2 zum Starten des Kraftfahrzeuges. Die Anzeige kann beispielsweise auf einem ebenfalls in Figur 2 dargestellten Kombiinstrument 3 für den Fahrer des Kraftfahrzeuges deutlich sichtbar dargestellt werden. Die Übermittlung der Anzahl der Wertungseinheiten kann über eine nicht dargestellte Funkverbindung in ein Datennetz erfolgen.

## Patentansprüche

1. Verfahren zur Ermittlung einer energiesparenden Fahrweise eines Kraftfahrzeuges, wobei vorgesehene Parameter der tatsächlichen Fahrweise des Kraftfahrzeuges ermittelt werden, Parameter der Fahrweise mit Parametern einer verbrauchsoptimierten Fahrweise verglichen werden und anhand des Vergleichs der Parameter Wertungseinheiten für verbrauchsoptimierte Fahrweise berechnet werden, wobei als Parameter der tatsächlichen Fahrweise ein Verhältnis aus gewählter Geschwindigkeit oder Beschleunigung zur gewählten Getriebeschaltstufe herangezogen wird und wobei die Fahrt des Kraftfahrzeuges in Abschnitte bezüglich der Zeit oder der Strecke unterteilt wird und wobei die Wertungseinheiten für die Abschnitte berechnet werden und **dadurch gekennzeichnet, dass** die Wertungseinheiten zu einem der energiesparenden Fahrweise entsprechenden Wert addiert werden, dass die Wertungseinheiten auf einem Datenträger (1) abgespeichert werden und dass der Datenträger (1) zur Abspeicherung der Wertungseinheiten als bauliche Einheit mit einem Berechtigungsschlüssel(2) zum Starten des Kraftfahrzeuges ausgebildet ist.

2. Verfahren nach Anspruch 1, **dadurch gekennzeichnet, dass** negative Wertungseinheiten für verbrauchssteigernde Fahrweise berechnet werden.

3. Verfahren nach Anspruch 1 oder 2, **dadurch gekennzeichnet, dass** als Parameter der tatsächlichen Fahrweise die gewählte Geschwindigkeit und Beschleunigung, die Wahl einer Getriebeschaltstufe und/oder die Stärke von Abbremsmanövern herangezogen werden.

4. Verfahren nach einem der vorhergehenden Ansprüche, **dadurch gekennzeichnet, dass** als Parameter der tatsächlichen Fahrweise vom Fahrer beeinflussbare fahrzeugspezifische Daten herangezogen werden.

5. Verfahren nach einem der vorhergehenden Ansprüche, **dadurch gekennzeichnet, dass** die Wertungseinheiten für den Fahrer sichtbar dargestellt werden.

## Claims

1. A method for determining an energy efficient operation mode of a motor vehicle, wherein designated parameters of the actual operation mode of the motor vehicle are determined, parameters of the operation mode are compared to parameters of a consumption-optimized operation mode and by means of the comparison of the parameters, evaluation units for consumption-optimized operation mode are calculated, wherein a ratio of selected speed or acceleration to the selected gear speed is drawn upon as parameter of the actual operation mode, and wherein the journey of the motor vehicle is divided into sections with regard to time or distance, and wherein the evaluation units are calculated for the sections, and **characterized in that** the evaluation units are added to a value corresponding to the energy efficient operation mode, that the evaluation units are stored on a data carrier (1), and that the data carrier (1) for the storage of the evaluation units is constructed as a structural unit with an authorization key (2) for starting the motor vehicle.

2. The method according to Claim 1, **characterized in that** negative evaluation units for consumption-increasing operation mode are calculated.

3. The method according to Claim 1 or 2, **characterized in that** the selected speed and acceleration, the selection of a gear speed and/or the intensity of braking manoeuvres are drawn upon as parameters of the actual operation mode.

4. The method according to one of the preceding claims, **characterized in that** vehicle-specific data that are able to be influenced by the driver are drawn upon as parameters of the actual operation mode.

5. The method according to one of the preceding claims, **characterized in that** the evaluation units are presented so as to be visible for the driver.

## Revendications

1. Procédé de détermination d'un mode de conduite à économie d'énergie d'un véhicule automobile, dans lequel des paramètres prévus du mode de conduite effectif du véhicule automobile sont déterminés, des paramètres du mode de conduite sont comparés à des paramètres d'un mode de conduite optimisé du point de vue de la consommation et des unités de classement sont calculées pour un mode de conduite optimisé du point de vue de la consommation sur la base de la comparaison des paramètres, dans lequel un rapport de la vitesse ou de l'accélération sélectionnée au rapport de boîte de vitesse est utilisé en tant que paramètre du mode de conduite effectif, et dans lequel le parcours du véhicule automobile est subdivisé en différentes parties par rapport au temps ou au trajet et dans lequel les unités de classement sont calculées pour lesdites parties, et **caractérisé en ce que** les unités de classement sont additionnées afin d'obtenir une valeur correspondant au mode de conduite à économie d'énergie, **en ce que** les unités de classement sont stockées sur un support de données (1) et **en ce que** le support de données (1) est conçu pour stocker les unités de classement en tant qu'unité structurelle avec une clé d'autorisation (2) permettant de démarrer le véhicule automobile.

2. Procédé selon la revendication 1, **caractérisé en ce que** des unités de classement négatives sont calculées pour des modes de conduite augmentant la consommation.

3. Procédé selon la revendication 1 ou 2, **caractérisé en ce que** la vitesse et l'accélération sélectionnée, le choix du rapport de vitesse et/ou l'intensité de manoeuvres de freinage sont utilisés en tant que paramètres du mode de conduite effectif.

4. Procédé selon l'une quelconque des revendications précédentes, **caractérisé en ce que** des données spécifiques au véhicule sont utilisées par le conducteur en tant que paramètres du mode de conduite effectif.

5. Procédé selon l'une quelconque des revendications précédentes, **caractérisé en ce que** les unités de classement sont représentées de manière visible pour le conducteur.
